# EUROPEAN PATENT APPLICATION

(11) **EP 3 958 225 A1**
(43) Date of publication of application: **23.02.2022**
(21) Application number: 21167206.8
(22) Date of filing: 07.04.2021
(51) Int. Cl.: G07C 9/00, H04L 12/28, H04L 29/08

(54) **NON-INTRUSIVE INTERNET OF THINGS CONTROL APPARATUS AND SYSTEM**

(30) Priority: 20.08.2020 TW 109128428
(71) Applicant: Oyatt Design Co., Ltd., Taipei City 111075 (TW); Columbia AloT Technologies Co., Ltd., New Taipei City 247018 (TW)
(72) Inventor: LIN, Chang-Hsiao, 111075 Taipei City (TW)
(74) Representative: Michalski Hüttermann & Partner Patentanwälte mbB

(57) **Abstract**

A non-intrusive IoT control system for controlling a control apparatus with digital buttons or touch panels includes a non-intrusive IoT control apparatus. The non-intrusive IoT control apparatus is disposed on the control apparatus with digital buttons or touch panels, and includes an input module, a processing module, a control device, a detecting module, and an output module. The input module receives a first control signal. The processing module generates a second control signal according to the first control signal when electrically receiving the first control signal. The control device performs an action of pressing a control button of the control apparatus with digital buttons or touch panels according to the second control signal when receiving the second control signal. The detecting module detects an action of pressing at least one control button. The output module generates a successful-pressing signal when the control device presses the at least one control button successfully.

## Description

### BACKGROUND

### Technical Field

The present invention relates to an Internet of Things (IOT) control apparatus and system. More specifically, the present invention relates to a non-intrusive IOT apparatus and system.

### Descriptions of the Related Art

IoT is a technology that has been widely studied over recent years, and there are also many researches and developments regarding IoT now.

IoT is an information carrier such as the Internet or a traditional telecommunication network, which is a network technology that enables all the objects with independent functions to communicate with each other. Control apparatuses with digital buttons or touch panels can be remotely controlled through IoT technology for automatic control. However, under the traditional technologies, it is necessary to set up corresponding IoT chips in the control apparatuses with digital buttons or touch panels to enable all of them to be remotely connected. In other words, to enable the control apparatuses with digital buttons or touch panels to be controlled remotely under IOT, they must be invaded with disassembly and inserted with corresponding IoT chips inside.

Such an intrusive method not only needs to remove or change the outer casings and the shape of the control apparatuses with digital buttons or touch panels, but also takes a lot of manpower and cost on setting for the connection between the control apparatuses with digital buttons or touch panels and the IoT chips. Moreover, in the case where IoT chips need to be disposed inside the control apparatuses with digital buttons or touch panels, disassembling the outer casings of the control apparatuses with digital buttons or touch panels may void the warranty of the control apparatuses with digital buttons or touch panels, and also infringe the intellectual property associated with disposing IoT chips inside the control apparatuses with digital buttons or touch panels. In addition, any breakdown maintenance caused by disassembling outer casings of the control apparatuses with digital buttons or touch panels may easily result in accountability dispute.

Accordingly, it is urgent in the art to provide a non-intrusive IoT control apparatus and system.

### SUMMARY

According to the above problems, the present invention provides a non-intrusive IoT control apparatus. The non-intrusive IoT control apparatus is disposed on a control apparatus with digital buttons or touch panels for controlling the control apparatus with digital buttons or touch panels. The non-intrusive IoT control apparatus comprises an input module, a processing module, and a control device, a detecting module, and an output module. The input module is electrically connected to the processing module, and receives a first control signal. The processing module generates a second control signal according to the first control signal when receiving the first control signal. The control device is electrically connected to the processing module, and generates an action of pressing at least one control button of the control apparatus with digital buttons or touch panels according to the second control signal when receiving the second control signal. The detecting module is electrically connected to the processing module, and detects the action of pressing the at least one control button. The output module is electrically connected to the processing module, and generates a successful-pressing signal when the control device presses the at least one control button successfully.

The present invention provides a non-intrusive IoT control system. The non-intrusive IoT control system comprises the non-intrusive IoT control apparatus mentioned above and an electronic device. The electronic device has a first communication module, and transmits the first control signal through the first communication module. The non-intrusive IoT control apparatus further comprises a second communication module for receiving the first control signal from the first communication module. The processing module is electrically connected to the second communication module, and receives the first control signal through the second communication module.

According to the above description, through applying the non-intrusive IoT control apparatus and system as provided to various control apparatuses with digital buttons or touch panels, the control apparatuses with digital buttons or touch panels can be remotely controlled and connected without being invaded or destroyed, so that an user can perform an action of pressing a button and further controls the control apparatuses with digital buttons or touch panels without invading, disassembling, or destroying them, as long as the non-intrusive IoT control apparatus and system transmit a control signal to the control device hung up on the control apparatuses with digital buttons or touch panels. For example, when the non-intrusive IoT control apparatus and system as provided are applied to a microwave oven, the microwave oven can heat foods without a user pressing buttons and determining the heating time, thereby saving the operating time of pressing the control button for heating. For employees of convenience store with heavy workloads, working against the clock, it can reduce their workloads and burdens. For consumers, it can also save their time for checking the heating information shown on food packaging. As another example, when the non-intrusive IoT control apparatus and system as provided are applied to other control apparatuses with digital buttons or touch panels, users may use a smart device to remotely control the operation of the control apparatuses with digital buttons or touch panels, so that they can use the control apparatuses with digital buttons or touch panels more conveniently. As another example, when the non-intrusive IoT control apparatus and system as provided are applied to safety management of a building, a security patrol and monitoring may be made without manpower, and thus saving the manpower cost. Moreover, when remotely controlling the control apparatuses with digital buttons or touch panels by the non-intrusive IoT control apparatus and system as provided, users do not need to touch the inherent control buttons of the control apparatuses with digital buttons or touch panels, and thus avoiding contagious infections between users that caused by touching the control buttons.

The non-intrusive IoT control apparatus and system as provided may be widely applied to various industrial machinery equipment with digital panels, or to any industrial machinery equipment with buttons. A control apparatus with digital buttons or touch panels may be any household appliance with buttons, digital buttons, control buttons or factory machinery equipment. For example, it may be, but not limited to, an air conditioner, a television, a refrigerator, a washing machine, a clothes dryer, an electric fan, a microwave oven, a coffee machine, an oven, a dishwasher, a cutting machine tool or equipment or the like. The cutting machine tool or equipment may be a machine tool with value control, a general machine tool, a lathe, a milling machine, a mechanical press, a grinding machine, a drilling machine, a planning machine, etc. Any other working machines that are dangerous and require the user to press can also be controlled by using the present invention, but the present invention is not limited to these examples.

Furthermore, no matter applying the non-intrusive IoT control apparatus and system as provided to which kind of control apparatuses with digital buttons or touch panels, when the buttons malfunction, a signal can also be sent to the end of the remote control or the cloud network for the sake of remotely monitoring and instantly receiving malfunction messages. On the other hand, by remotely controlling, it can also prevent users from manually operating dangerous machines or tasks for their safety. In addition, a big data database can be created for users' reference by collecting the working conditions of various control apparatuses with digital buttons or touch panels.

### BRIEF DESCRIPTION OF THE DRAWINGS

FIG. 1 depicts a block diagram of a non-intrusive IoT control apparatus according to an embodiment of the present invention;
FIG. 2 depicts a block diagram of a non-intrusive IoT control system according to an embodiment of the present invention;
FIG. 3 depicts a schematic view of a control device being disposed on a control apparatus with digital buttons or touch panels according to an embodiment of the present invention;
FIG. 4 depicts a block diagram of a non-intrusive IoT control system according to another embodiment of the present invention;
FIG. 5 depicts a block diagram of a non-intrusive IoT control system according to another embodiment of the present invention; and
FIG. 6 depicts a block diagram of a non-intrusive IoT control system according to another embodiment of the present invention.

### DETAILED DESCRIPTION

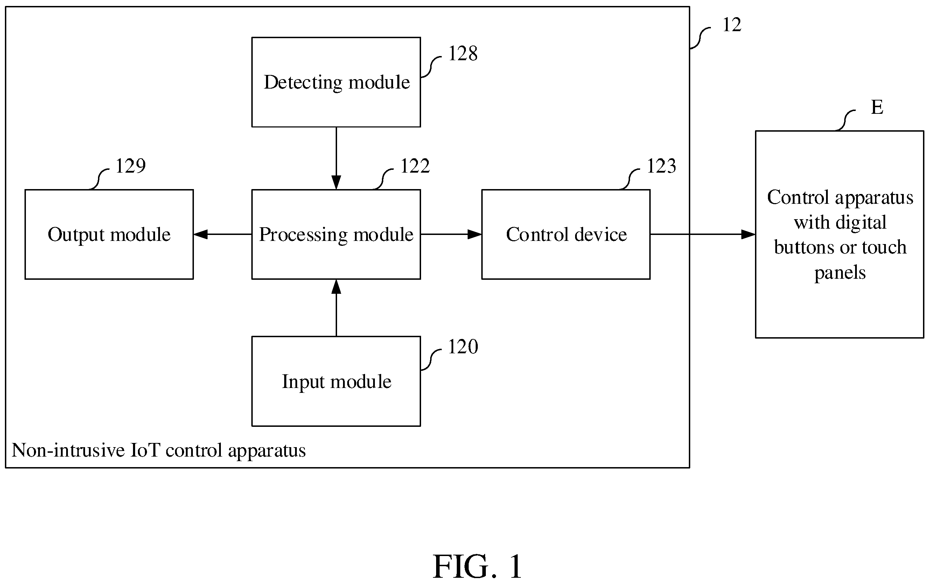

Referring to FIG. 1, FIG. 1 depicts a block diagram of a non-intrusive IoT control apparatus according to an embodiment of the present invention. The non-intrusive IoT control apparatus 12 is disposed on a control apparatus with digital buttons or touch panels E ("control apparatus E" for short) for controlling at least one control button in a control button area of the control apparatus E. The non-intrusive IoT control apparatus 12 comprises an input module 120, a processing module 122, a control device 123, a detecting module 128, and an output module 129. The input module 120 receives a first control signal. The processing module 122 generates a second control signal according to the first control signal when receiving the first control signal. The control device 123 is electrically connected to the processing module 122, and generates an action of pressing the at least one control button of the control apparatus E according to the second control signal when receiving the second control signal. The detecting module 128 is electrically connected to the processing module 122, and detects the action of pressing the at least one control button. The output module 129 is electrically connected to the processing module 122, and generates a successful-pressing signal when the control device presses the at least one control button successfully.

It shall be noted that, in the embodiment of FIG. 1, the input module 120, the output module 129, and the detecting module 128 of the non-intrusive IoT control apparatus 12 are not essential components, and they can be disposed additionally according to users' needs. The input module 120 may be, but not limited to, a keyboard, a button(s), a voice input module, a touch screen, a membrane touch button(s), an infrared receiver or an ultrasonic receiver, for receiving the first control signal. In addition, after receiving the first control signal, the input module 120 can transmit the first control signal to the processing module 122 through wireless transmission technology, or transmit the first control signal to the processing module 122 when it is electrically connected to the processing module 122. The present invention is not limited to the two transmissions. In other words, although the input module 120 shown in FIG. 1 is directly connected to the processing module 122, the input module 120 may transmit the first control signal to the processing module 122 through wired transmission, wireless transmission, or others. The output module 129 may be, but is not limited to, a screen, a light-emitting diode, a display module, a voice module. The output module 129 may output such signals as sound, light or picture to show the result that the control device 123 successfully presses control buttons. For example, when the control device 123 presses a control button of the elevator, it can be detected by the detecting module 128 that whether the control device 123 presses the control button successfully. Take a photoresistor as an example of the detecting module 128, when the control device 123 presses the control button successfully, the photoresistor detects the luminescence signal of the control button of the elevator, which indicates that the control device 123 has pressed the control button of the elevator successfully. Moreover, as another example, when the detecting module 128 with a function of image detection detects that the control device 123 has pressed the control button of the elevator successfully, the output module 129, such as a monitor, displays a screen showing that the elevator goes up or down, which indicates that the control device 123 has pressed the control button of the elevator successfully. Another case is outputting a sound of successful-pressing by a voice module. For example, a microwave oven can output voice messages regarding the heating time, heating start, and heating end. The detecting module 128 may be various devices which can detect whether the control device 123 presses control buttons successfully, such as but not limited to, an image detecting module, a light source detecting module, and a sound detecting module. The image detecting module detects the screen of whether the control device 123 presses a control button successfully or detects the screen or message shown by the output module 129. The light source detecting module detects the luminescence signal of whether the control button is pressed successfully. The sound detecting module detects the voice messages of whether the control button is pressed successfully. However, no matter what kind of detecting module the detecting module 128 is, it can be used to detect the service state of the control apparatus E, and is not limited.

Furthermore, in the embodiment of FIG. 1, the position where the non-intrusive IoT control apparatus 12 is disposed on the control apparatus E is not limited, and it is also not limited as for whether the non-intrusive IoT control apparatus 12 corresponds to the position and function of control buttons of a control button area of the control apparatus E. For example, the input module 120 can correspond to the buttons of the control apparatus E partially, fully, or through function expansion. In the case where the input module 120 corresponds to the control apparatus E through function expansion, the input module 120 can produce the effect of pressing control buttons of the control apparatus E several times by one single control button, which means that the effect of pressing the single control button of the input module 120 is the same as that of pressing control buttons of the control apparatus E several times (such as four or five times). For example, users can complete twice cooking by a microwave oven without pressing the heating button twice. Or, the input module 120 can expand the function of pressing a plurality of buttons in a modular way; that is, use one single button to replace the function of pressing plurality of buttons on the original machine. By way of example, without limitation, when pressing a modular function button, a mechanical finger is controlled to perform actions of pressing the control buttons A, B, C on the control apparatus E, or actions of repeatedly pressing the control button A. The modular extended function can be modified by program according to user's needs.

As mentioned above, in the embodiment of FIG. 1, when the control device 123 successfully performs the action of pressing the at least one control button of the control apparatus E, the detecting module 128 detects that the control device 123 has successfully completed the action, and the output module 129 outputs a successful-pressing signal. When the control device 123 fails to perform the action, the detecting module 128 detects that the control device 123 does not successfully complete the action, the output module 129 outputs a failed-pressing signal, and the processing module 122 transmits the control signal to the control device 123 again to perform the action one more time. Alternatively, after failing to press the control button of the control apparatus E several times, the processing module 122 transmits a failed-pressing signal or a warning signal to a cloud network through a communication module to display the message indicating that the control button may possibly exist failure. Accordingly, through the detection of the detecting module 128, it can be confirmed that whether the control device 123 correctly performs the action of pressing the button.

In the embodiment of FIG. 1, the electrical connection between the processing module 122, the detecting module 128, the input module 120, the output module 129, and the control device 123 may be, but not limited to, general-purpose input/output (GPIO), Universal Asynchronous Receiver/Transmitter (UART), Inter-Integrated Circuit (I²C), Serial Peripheral Interface (SPI), or one-wire protocol.

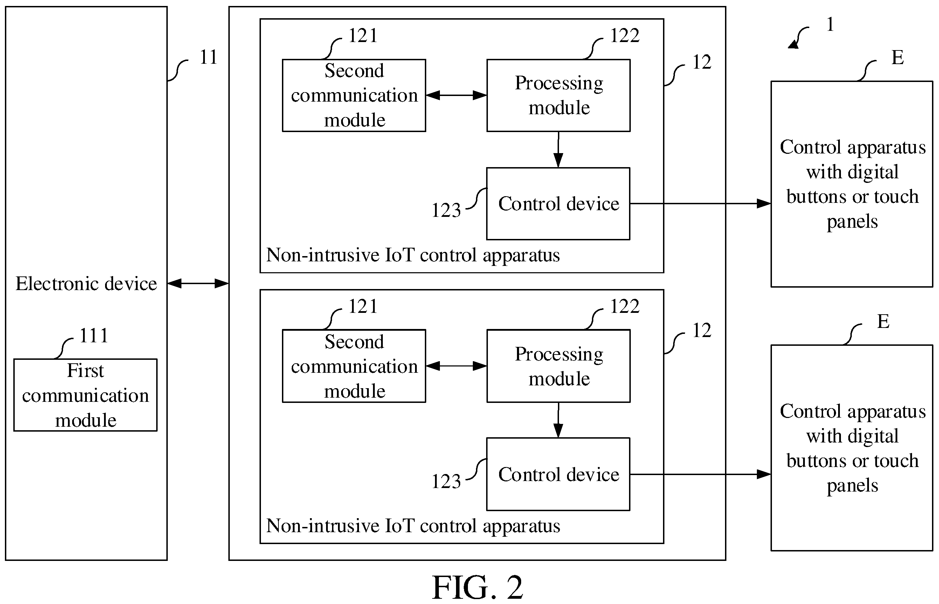

Referring to FIG. 2 which depicts a block diagram of a non-intrusive IoT control system of the present invention. The non-intrusive IoT control system 1, which is applied to at least one control button in a control button area of a control apparatus with digital buttons or touch panels E ("control apparatus E" for short), comprises an electronic device 11 and a non-intrusive IoT control apparatus 12. The electronic device 11 comprises a first communication module 111, and transmits a first control signal through the first communication module 111. The non-intrusive IoT control apparatus 12 is disposed on a control apparatus E with at least one control button, and comprises a second communication module 121, a processing module 122, and a control device 123. The second communication module 121 receives the first control signal from the first communication module 111. The processing module 122 is electrically connected to the second communication module 121, and generates a second control signal according to the first control signal. The control device 123 is electrically connected to processing module 122, and generates an action of pressing the at least one control button of the control apparatus E according to the second control signal.

Referring to FIG. 2, in an embodiment, the first communication module 111 of the electronic device 11 and the second communication module 121 of the non-intrusive IoT control apparatus 12 can be connected by various wireless communication technologies or wired communication technologies to form an IoT control system. Wireless communication technology may be, but not limited to, Bluetooth, Wireless Fidelity (Wi-Fi), 4G communication network, or 5G communication network. Wired communication technology may be, but not limited to, an RS485, a fixed network, an Ethernet network. In the mode of Wi-Fi connection, it can be an access point (AP) mode, a station mode, or a combination of the AP mode and the station mode. To be more precise, in the embodiment in which the electronic device 11 is connected to the non-intrusive IoT control apparatus 12 as shown in FIG. 2, the electronic device 11 and the non-intrusive IoT control apparatus 12 can be regarded as an access point, a workstation, or an access point plus a workstation, and the electronic device 11 wirelessly connects to a plurality of the non-intrusive IoT control apparatuses 12 to further control the actions of pressing the control apparatuses E. Besides, multiple non-intrusive IoT control apparatuses 12 may be connected form a tree network or a mesh network, which is not limited in the present invention. The connections between an electronic device 11 and a non-intrusive IoT control apparatus 12 and between any two non-intrusive IoT control apparatuses 12 can be made by the method for automatically establishing wireless network connection as described in Taiwan Invention Patent No. 1599257.

Moreover, in the embodiment shown in FIG. 2, the non-intrusive IoT control apparatuses 12 further comprises a memory (not shown) for storing the information when different electronic devices 11 is connected to the non-intrusive IoT control apparatuses 12. In addition, in the embodiment of the present invention, the memory can be a flash memory and a random access memory. The memory is used to store various updated software and data.

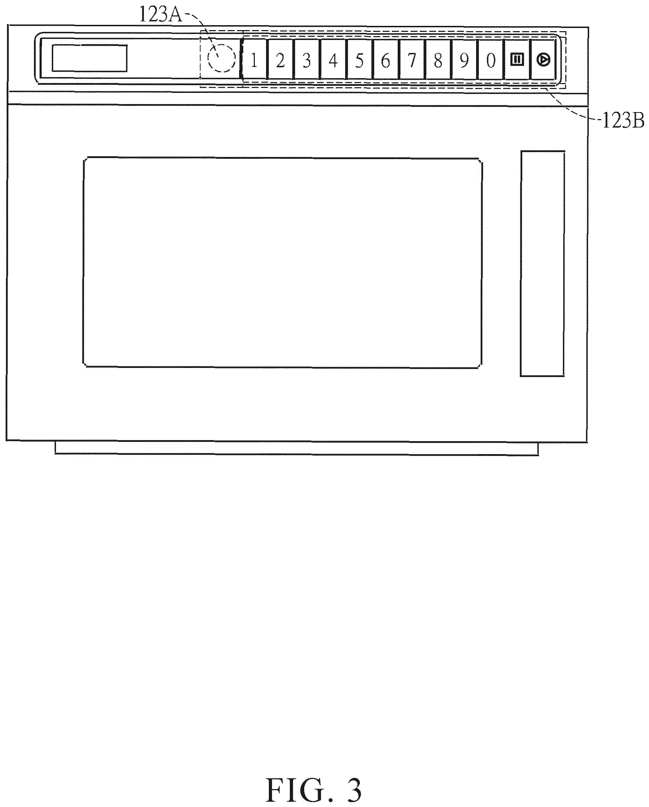

Referring to FIG. 3 which depicts a schematic view of the control device 123 being disposed on the control apparatus E. In an embodiment of the present invention, the control device 123 may include a mechanical finger 123A, a moving track 123B, and a driving motor (not shown). The mechanical finger 123A is configured to press at least one control button of the control apparatus E. The moving track 123B may be a sliding track or a rolling track, and is disposed for a position of a control button area of the control apparatus E. The mechanical finger 123Ais disposed on the moving track 123B. The driving motor is electrically connected to the mechanical finger 123A, and drives the mechanical finger 123 A to move along the moving track till the position of the corresponding control button in the control button area of the control apparatus E when receiving the second control signal, in order to drive the mechanical finger 123A to press the corresponding control button. It should be noted that the first control signal in the present invention may be a signal of pressing a plurality of control buttons of the control apparatus E. For example, to press control buttons of number "2" and "0" of the control apparatus E, the processing module 122 analyzes the first control signal which can be a signal for the need of pressing the control buttons of number "2" and "0" of the control apparatus E, and accordingly generates the second control signal which indicates the distance between the mechanical finger 123A and the position of the control buttons of number "2" to control the mechanical finger 123A to move to the position of the control buttons of number "2" and "0" and press the control buttons. In another embodiment, one mechanical finger 123A can be disposed on each control buttons in the control button area of the control apparatus E, and the target mechanical finger(s) 123A will be controlled to turn on/off or press the corresponding control button when receiving the second control signal from the processing module 122. For example, if the control apparatus E have ten control buttons indicated by number "0" to"9", ten mechanical fingers 123A can be disposed to the positions of the ten control buttons of number "0" to"9" respectively. The non-intrusive IoT control system 1 can be applied to various control apparatuses E in a non-intrusive way and automatically control pressing of the control buttons of the control apparatuses E. The followings are different embodiments where the present invention is applied to various control apparatuses E.

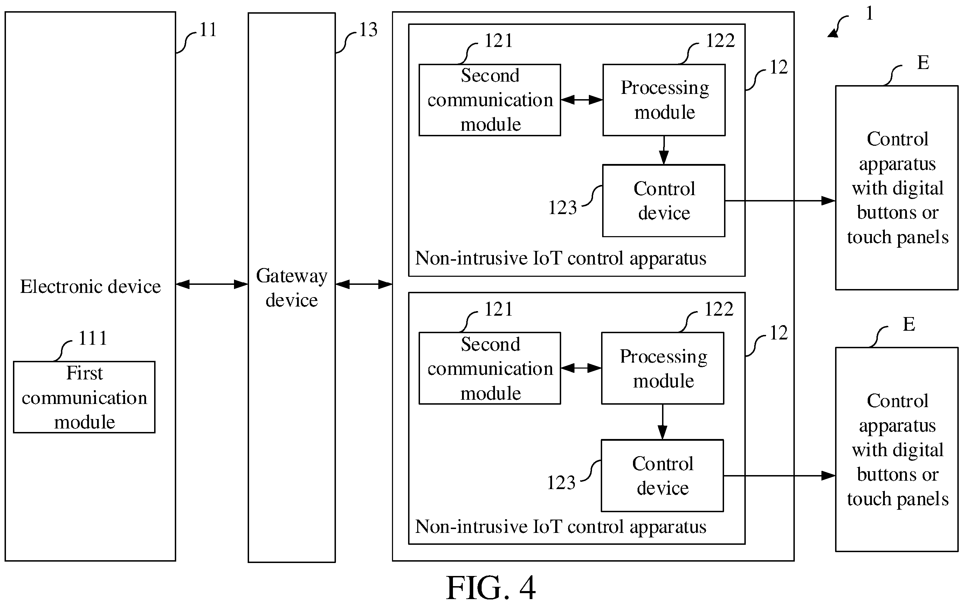

Referring to FIG. 4 which depicts a block diagram of a non-intrusive IoT control system 1 according to another embodiment of the present invention. In an embodiment, the electronic device 11 may be a smart device such as, but not limited to, a smart phone, a tablet, a computer, or the like. The control apparatus E may be a household appliance such as a coffee machine, an electric fan, and any other devices with control buttons. The non-intrusive IoT control system 1 further comprises a gateway device 13, and the gateway device 13 connects to the second communication module 121 of the non-intrusive IoT control apparatus 12 through the method for automatically establishing wireless network connection (described in Taiwan Invention Patent No. 1599257), so as to control the actions of the control apparatus E. Furthermore, in an embodiment, wired technology such as, but not limited to, RS485, fixed network, or Ethernet network, can be used to connect the gateway device 13. In another embodiment of FIG. 4, the first control signal can be transmitted from a cloud network to the gateway device 13, thereby controlling the actions of the control apparatus E through the non-intrusive IoT control apparatus 12. It is not a limitation to the present invention that the electronic device 11 transmits the first control signal to the gateway device 13 to control the non-intrusive IoT control apparatus 12.

In the embodiment of FIG. 4, the non-intrusive IoT control apparatus 12 may be an IoT chip with functions of communication and signal processing. Under the concept of the embodiment, when users want to utilize an IoT system, the IoT will automatically establish a connection as long as the users turn on the power of the gateway device 13 and the non-intrusive IoT control apparatus 12. The details can refer to the method for automatically establishing a wireless network connection as described in Taiwan Invention Patent No. 1599257, and thus not be repeated herein.

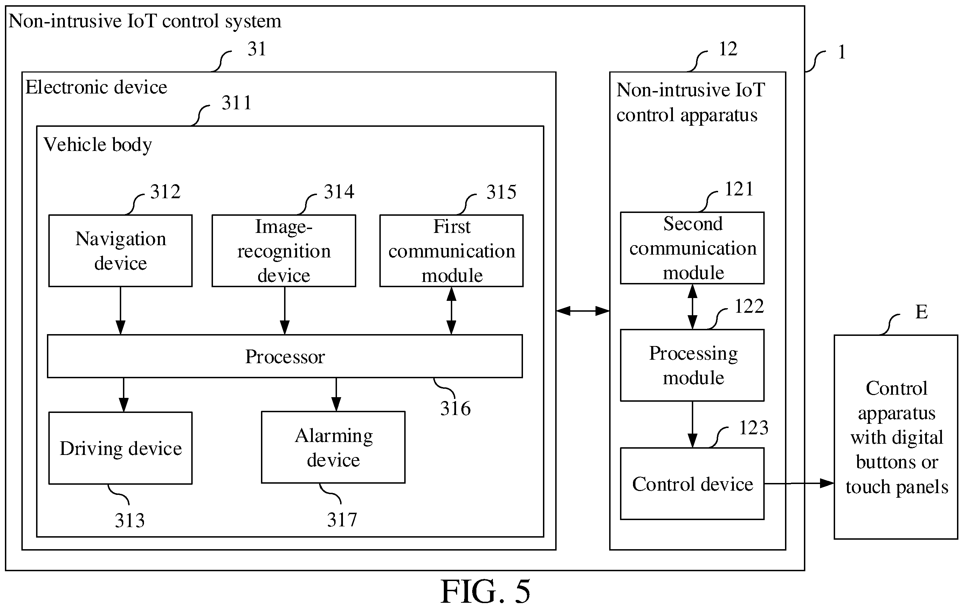

Referring to FIG. 5 which depicts a block diagram of the non-intrusive IoT control system 1 according to another embodiment of the present invention. In an embodiment, the electronic device 31 is a rover, the non-intrusive IoT control apparatus 12 comprises a second communication module 121, a processing module 122, and a control device 123, and the control apparatus E is an elevator in a building. The rover can be used to patrol each floor in the building, an outer area surrounding the building, and an industrial park and factory. The rover comprises a vehicle body 311, a navigation device 312, a driving device 313, an image-recognition device 314, a first communication module 315, a processor 316, and an alarming device 317. The vehicle body 311 has a plurality of wheels. In some embodiments, the vehicle body 311 may also be mounted with crawler wheels. The navigation device 312 is disposed on the vehicle body 311 and has a predetermined navigation path. The driving device 313 is disposed on the vehicle body 311 for driving the wheels. The image-recognition device 314 is disposed on the vehicle body 311 for recognizing an environment surrounding the vehicle body 311. The first communication module 315 is disposed on the vehicle body 311 for detecting the media access control address (MAC address) of a nearby smart device. The processor 316 is disposed on the vehicle body 311 for determining whether the MAC address of the smart device is in a predetermined list. The alarming device 317 is disposed on the vehicle body 311 for sending a warning signal when the processor 316 determines that the MAC address of the smart device is not in the predetermined list.

Generally, in the embodiment of FIG. 5, users always carry their smartphones, so the first communication module 315 disposed on the rover may detect a signal transmitted by a smartphone of a user, and the processor 316 may determine whether the MAC address of the smartphone is in the predetermined list. During the rover patrol each floor in a building and an industrial park and factory according to the predetermined navigation path, if the rover detects that the MAC address of a smartphone of a user is in the predetermined list, it means that the user is a predetermined person who is allowed to enter the building or the industrial park. However, if the MAC address of the smartphone is not in the predetermined list, it means that the user is not any predetermined person; that is, the user enters the building or the industrial park without consent. At this time, the alarming device 317 transmits a warning signal, or sends a warning signal to a monitoring center.

Furthermore, it is common that a building includes an elevator, so in the embodiment of FIG. 5, the non-intrusive IoT control apparatus 12 according to the present invention is disposed on a floor-control button area inside the elevator car, and the floor-control button area has a plurality of floor-control buttons including at least a first floor-control button and a second floor-control button. The control device 123 is disposed for a position of the floor-control button area, so that the mechanical finger of the control device 123 can appropriately press each floor button in the elevator's floor-control button area. Besides, since the non-intrusive IoT control apparatus 12 is disposed inside the elevator car, the floor-control buttons in the floor-control button area of the elevator may be pressed by the mechanical finger. In other embodiments, the abovementioned gateway device 13 may also be disposed outside the elevator car (i.e., the exterior of the elevator door) to act as a communication module outside the elevator car. The gateway device 13 is configured to receive the first control signal transmitted by the first communication module 315, and transmit the first control signal to the non-intrusive IoT control apparatus 12 disposed inside the elevator car. Moreover, the gateway device 13 outside the elevator car can connect to the non-intrusive IoT control apparatus 12 inside the elevator car in a wired or wireless way, which is not limited in the present invention.

In addition, in the embodiment of FIG. 5, when the rover moves to a waiting area of the elevator according to the predetermined navigation path, the first communication module 315 disposed on the rover transmits a first control signal to the second communication module 121 of the non-intrusive IoT control apparatus 12 disposed in the floor-control button area of the elevator, so that the processing module 122 of the non-intrusive IoT control apparatus 12 generates a second control signal according the first control signal to control the control device 123 to press a first floor-control button in the floor-control button area of the elevator, and make the rover get into the elevator when the elevator moves to a floor where the rover is located, and then the rover transmits a third control signal through the first communication module 315 to the second communication module 122 of the non-intrusive IoT control apparatus 12 disposed on the floor-control button area inside the elevator, so that the processing module 122 generates a fourth control signal according to the third control signal to control the control device 123 to press a second floor-control button in the floor-control button area of the elevator, thereby making the rover move to other floors of the building through the elevator. After the rover finishes the patrol of all the floors in the building, the rover will move to the outside of the building according to the predetermined path to patrol the area outside the building. Besides, the monitoring center may also transmit control signals through a network to control the moving path of the rover (but this is not a limitation). In an embodiment, for example, when the rover moves to the third floor of building A, based on the method for automatically establishing wireless network connection as described above, the rover performs an identification and a connection according to the service setting identification code (SSID) of the gateway device 13 disposed on the exterior of the elevator car stopped on the third floor of building A, and add numerical information (e.g. A3) to the SSID to represent the information of the gateway device 13 disposed on the exterior of the elevator car stopped on the third floor of building A.

Furthermore, in the embodiment of FIG. 5, although there's a security mechanism by determining whether the MAC address of a smartphone is in the predetermined list, another security mechanism based on face recognition is also feasible if an ultrasonic apparatus and a camera are mounted on the rover, which can send real-time face images captured in the building to the monitoring center. In addition, by the ultrasonic apparatus and the camera, the rover can also learn the patrol path through image recognition, and store the learned path in memory, so that it can move based on the learned path in the future.

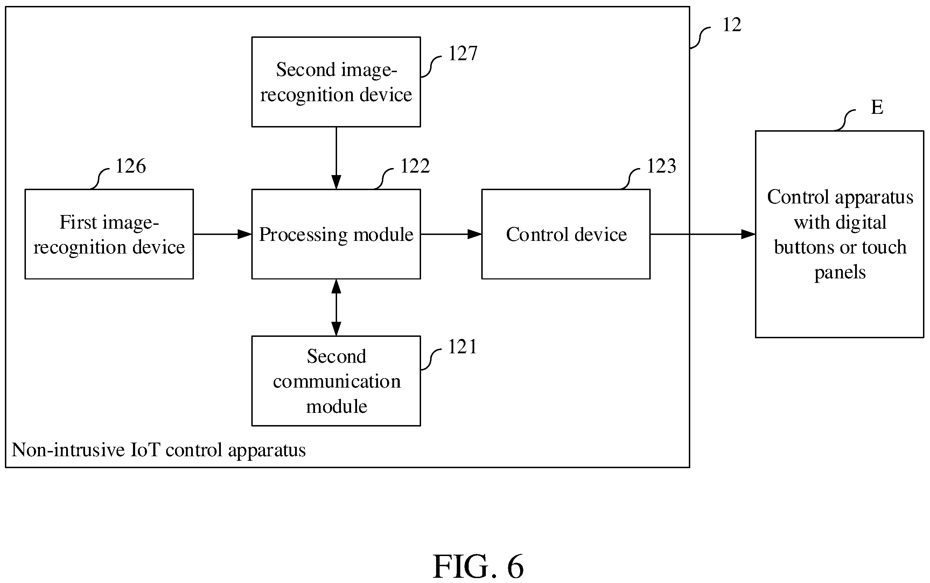

Referring to FIG. 6 which depicts a block diagram of the non-intrusive IoT control system 1 according to another embodiment. In an embodiment, control of the electronic device 11 is unnecessary, and the non-intrusive IoT control apparatus 12 of the non-intrusive IoT control system 1 is directly disposed on a control apparatus with digital buttons or touch panels E. The non-intrusive IoT control apparatus 12 comprises a first-image recognition device 126, a second image-recognition device 127, a processing module 122, and a control device 123. The first image-recognition device 126 recognizes a product image. The processing module 122 is electrically connected to the first image-recognition device 126 and the second-image recognition device 127, and generates a control signal according to the product image and the service state of the control apparatus E. The control device 123 is electrically connected to the processing module 122, and generates an action of pressing at least one control button of the control apparatus E.

In the embodiment of FIG. 6, the control apparatus E may be a microwave oven, the product image may be a food barcode, and the service state of the control apparatus E may be the heating state and actuation state of the microwave oven. The food barcode may be a two-dimensional barcode (QR CODE) or a one-dimensional barcode. The control signal may be a control signal of the heating time of the microwave oven. To be more precise, the first image-recognition device 126 is disposed on the outer casing of the microwave oven, and when a user wants to heat a food, the first image-recognition device 126 scans and recognizes the barcode shown on the food packaging to generate a product image of the barcode. The barcode shown on the food packaging may provide information such as the type of food and the heating time. After analyzing the barcode, the processing module 122 generates the control signal of the heating time so as to control the control device 123 to press the heating time button of the microwave oven. The second image-recognition device 127 is disposed on the outer casing of the microwave oven, and is configured to photograph the service state of the microwave oven, wherein the service state may be heating state and actuation state.

In the embodiment of the microwave oven shown in FIG. 6, the processing module 122 may be electrically connected to the first image-recognition device 126, so that the processing module 122 performs image processing after the first image-recognition device 126 captures the product image. The product image captured by the first image-recognition device 126 can also be transmit to a cloud device for analysis and calculation through a network, and a control signal of heating time is generated according to the calculation result and then transmitted back to the second communication module 121 by the cloud device, so that the control device 123 generate an action of pressing the heating time button of the microwave oven according to the control signal of heating time. Alternatively, the product image captured by the first image-recognition device 126 can be transmitted to the processing module of the gateway device 13 for analysis and calculation, and a control signal of heating time is generated according to the calculation result and then transmitted back to the second communication module 121, so that the control device 123 generates an action of pressing the heating time button of the microwave oven according to the control signal of the heating time. Through the gateway device 13, the product image captured by the first image recognition device 126 may also be transmitted to the cloud device by the gateway device 13 through a network for analysis and calculation, and a control signal of heating time is generated according to the calculation result and then transmitted back to the second communication module 121, so that the control device 123 generates an action of pressing the heating time button of the microwave oven according to the control signal of the heating time. In an embodiment, the algorithm for image analysis may be an artificial neural algorithm but not limited thereto. In addition, the heating state and the actuation state of the microwave oven photographed by the second image-recognition device 127 may also be sent to a cloud apparatus for remote monitoring. In an embodiment, the non-intrusive IoT control apparatus 12 further comprises a display device (not shown), and the display device is disposed on the microwave oven for displaying the heating state and the actuation state of the microwave oven photographed by the second image-recognition device 127, thereby determining whether the microwave oven is actuated successfully. Additionally, in the above embodiment, if the first image-recognition device 126 fails to recognize the barcode shown on the food packaging or generate the product image of the barcode, the first image recognition device 126 may further photograph the size of the food packaging and the appearance of the food, and transmit the generated product image to the gateway device 13 or to the cloud device for analysis and calculation.

Furthermore, in all of the drawings, the communication between the processing module 122 and the first communication module 111, the communication between the processing module 122 and the first communication module 315, the communication between the processing module 122 and the second communication module 121, the communication between the processing module 122 and the gateway device 13, the communication between the first communication module 111 and the second communication module 121, and the communication between the first communication module 315 and the second communication module 121 are all two-way communication which can transmit signals to each other (but this is not a limitation).

According to the above description, through applying the non-intrusive IoT control apparatus and system as provided to various control apparatuses with digital buttons or touch panels, the control apparatuses with digital buttons or touch panels can be remotely controlled and connected without being invaded or destroyed, so that an user can perform an action of pressing a button and further controls the control apparatuses with digital buttons or touch panels without invading, disassembling, or destroying them, as long as the non-intrusive IoT control apparatus and system transmit a control signal to the control device hung up on the control apparatuses with digital buttons or touch panels. For example, when the non-intrusive IoT control apparatus and system as provided are applied to a microwave oven, the microwave oven can heat foods without a user pressing buttons and determining the heating time, thereby saving the operating time of pressing the control button for heating. For employees of convenience store with heavy workloads, working against the clock, it can reduce their workloads and burdens. For consumers, it can also save their time for checking the heating information shown on food packaging. As another example, when the non-intrusive IoT control apparatus and system as provided are applied to other control apparatuses with digital buttons or touch panels, users may use a smart device to remotely control the operation of the control apparatuses with digital buttons or touch panels, so that they can use the control apparatuses with digital buttons or touch panels more conveniently. As another example, when the non-intrusive IoT control apparatus and system as provided are applied to safety management of a building, a security patrol and monitoring may be made without manpower, and thus saving the manpower cost. Moreover, when remotely controlling the control apparatuses with digital buttons or touch panels by the non-intrusive IoT control apparatus and system as provided, users do not need to touch the inherent control buttons of the control apparatuses with digital buttons or touch panels, and thus avoiding contagious infections between users that caused by touching the control buttons.

## Claims

1. A non-intrusive Internet of Things, IoT, control apparatus, being disposed on a control apparatus with digital buttons or touch panels for controlling at least one control button in a control button area of the control apparatus with digital buttons or touch panels, and comprising:
an input module, being configured to receive a first control signal;
a processing module, being electrically connected to the input module, and being configured to generate a second control signal according to the first control signal when receiving the first control signal; and
a control device, being electrically connected to the processing module, and being configured to perform an action of pressing the at least one control button of the control apparatus with digital buttons or touch panels according to the second control signal when receiving the second control signal.

2. The non-intrusive IoT control apparatus of Claim 1, further comprising:
a detecting module, being electrically connected to the processing module, and being configured to detect the action of pressing the at least one control button.

3. The non-intrusive IoT control apparatus of any of Claims 1 to 2, further comprising:
an output module, being electrically connected to the processing module, and being configured to generate a successful-pressing signal when the control device presses the at least one control button successfully.

4. The non-intrusive IoT control apparatus of any of Claims 1 to 3, further comprising:
a first image-recognition device, being configured to recognize a product image;
wherein the processing module is electrically connected to the first image-recognition device, and the processing module generates the second control signal according to the product image when receiving the product image.

5. The non-intrusive IoT control apparatus of Claim 4, wherein the control apparatus with digital buttons or touch panels is a microwave oven, and the product image is a food barcode.

6. The non-intrusive IoT control apparatus of Claim 5, further comprising a second image-recognition device, being electrically connected to the processing module, and being configured to recognize a service state of the microwave oven.

7. A non-intrusive IoT control system, comprising:
the non-intrusive IoT control apparatus of any of Claims1 to 3; and
an electronic device, having a first communication module, and being configured to transmit the first control signal through the first communication module;
wherein the non-intrusive IoT control apparatus further comprises:
a second communication module, being configured to receive the first control signal from the first communication module;
wherein the processing module is electrically connected to the second communication module, and is configured to receive the first control signal through second communication module.

8. The non-intrusive IoT control system of Claim 7, wherein the electronic device is a rover and the control apparatus with digital buttons or touch panels is an elevator, and the rover further comprises:
a vehicle body, having a plurality of wheels;
a navigation device with a predetermined navigation path, being disposed on the vehicle body;
a driving device, being disposed on the vehicle body, and being configured to drive the wheels;
an image-recognition device, being disposed on the vehicle body, and being configured to recognize an environment surrounding the vehicle body;
a signal detector, being disposed on the vehicle body, and being configured to detect a media access control address, MAC address, of a smart device near the environment;
a processor, being disposed on the vehicle body, and being configured to determine that whether the MAC address of the smart device is in a predetermined list; and
an alarming device, being disposed on the vehicle body, and being configured to send a warning signal when the processor determines that the MAC address of the smart device is not in the predetermined list;
wherein when the rover moves to a waiting area of the elevator according to the predetermined navigation path, the rover transmits the first control signal to the second communication module of the non-intrusive IoT control apparatus disposed on a floor-control button area of the elevator through the first communication module, so that the processing module of the non-intrusive IoT control apparatus generates the second control signal according to the first control signal to control the control device to press a first floor-control button of the floor-control button area of the elevator, thereby making the elevator move to a floor where the rover is located.

9. The non-intrusive IoT control system of Claim 8, wherein when the rover enters the elevator, the rover transmits a third control signal to the second communication module of the non-intrusive IoT control apparatus disposed on the floor-control button area of the elevator on the floor through the first communication module, so that the processing module generates a fourth control signal according to the third control signal to control the control device to press a second floor-control button of the floor-control button area in the elevator, thereby making the rover move to other floors through the elevator.

10. The non-intrusive IoT control system of any of Claims 7 to 9, wherein the electronic device comprises a smart device.

11. The non-intrusive IoT control system of any of Claims 7 to 10, further comprising a gateway device, being configured to receive the first control signal transmitted by the electronic device, wherein the gateway device connects to the non-intrusive IoT control apparatus through a method of automatically establishing a wireless network connection to control at least one control button of a control button area of the control apparatus with digital buttons or touch panels according to the first control signal.

12. The non-intrusive IoT control system of any of Claims 7 to 11, wherein the control device comprises:
a moving track, being disposed for a position of a control button area of the control apparatus with digital buttons or touch panels;
a mechanical finger, being disposed on the moving track; and
a driving motor, being configured to drive the mechanical finger to move along the moving track till a position of the at least one control button of the control apparatus with digital buttons or touch panels according to the second control signal, and switch the at least one control button.
